**Europäisches Patentamt**

**European Patent Office**

**Office européen des brevets**

(19)

(11)　**EP 1 336 780 B1**

(12)　　　**EUROPÄISCHE PATENTSCHRIFT**

(45) Veröffentlichungstag und Bekanntmachung des
Hinweises auf die Patenterteilung:
**08.12.2004　Patentblatt 2004/50**

(51) Int Cl.7: **F16J 15/38**

(21) Anmeldenummer: **03001876.6**

(22) Anmeldetag: **29.01.2003**

(54) **Sekundärdichtungselement für eine Gleitringdichtungsanordnung**

Secondary seal for a slip-ring sealing device

Joint secondaire pour dispositif de joint d'étanchéité à bague glissante

(84) Benannte Vertragsstaaten:
**AT BE BG CH CY CZ DE DK EE ES FI FR GB GR
HU IE IT LI LU MC NL PT SE SI SK TR**

(30) Priorität: **14.02.2002　DE 20202177 U**

(43) Veröffentlichungstag der Anmeldung:
**20.08.2003　Patentblatt 2003/34**

(73) Patentinhaber: **Burgmann Dichtungswerke
GmbH & Co. KG
82515 Wolfratshausen (DE)**

(72) Erfinder:
  • **Dechow, Frank
    67551 Worms (DE)**
  • **Ongerth, Doris
    82538 Geretsried (DE)**
  • **Ries, Wolfgang
    82438 Eschnenlohe (DE)**
  • **Sveijkovsky, Reinhard
    82538 Geretsried (DE)**
  • **Watzinger, Stefan
    82538 Geretsried (DE)**
  • **Woppowa, Robert
    82515 Wolfratshausen (DE)**

(74) Vertreter: **Schmidt, Horst, Dr.
Patentanwalt
Postfach 44 01 20
80750 München (DE)**

(56) Entgegenhaltungen:
**DE-U- 20 103 975　　　US-A- 4 124 218
US-A- 4 364 571　　　US-A- 4 971 337**

EP 1 336 780 B1

**Beschreibung**

Die Erfindung betrifft ein Sekundärdichtungselement für eine Gleitringdichtungsanordnung, insbesondere für steriltechnische Anwendungen. Sie betrifft insbesondere ein Sekundärdichtungselement zur Abdichtung eines stationären Gleitringes einer Gleitringdichtungsanordnung.

Bei steriltechnischen Anwendungen einer Gleitringdichtungsanordnung, z.B. für die Abdichtung einer Pumpe zur Förderung von flüssigen Nahrungsmitteln oder pharmazeutischen Substanzen, müssen Toträume und dgl., in denen sich die Substanzen ansammeln und über längere Zeiten zurückgehalten werden können, vermieden werden. Ferner muss die Gleitringdichtungsanordnung leicht gereinigt werden können und glatte abriebfeste Oberflächen aufweisen. Die grundlegenden Anforderungen bei steriltechnischen Anwendungen sind in den Standards der European Highgenic Engineering Design Group (EHEDG) zusammengefasst und müssen bei einer Gleitringdichtungsanordnung erfüllt sein, damit diese für den Einsatz bei steriltechnischen Anwendungen ein Zulassungszertifikat erhält. Kritisch ist u.a. die Sekundärdichtung zur Abdichtung des stationären Gleitringes einer Gleitringdichtungsanordnung gegenüber dem haltenden Bauteil, z.B. dem Gehäuse einer Gerätschaft. Die dazu sich anbietenden O-Ringe sind bei steriltechnischen Anwendungen nachteilig, da sie aufgrund ihrer Querschnittskonfiguration und Anordnung in Montagenuten oder -ausnehmungen anfällig für die Bildung von Toträumen sind. Zwar ist aus der US-A-4 175 753 ein Sekundärdichtungselement bekannt, das im entlasteten Zustand einen rhomboiden Querschnitt mit unter einem spitzen Winkel zueinander stehenden Seitenflächen hat, der im belasteten Zustand zu einer Quaderform elastisch umgeformt werden kann. Dadurch werden jedoch bei mehr oder weniger Entlastung jedesmal Toträume beidseitig des Sekundärdichtungselement gebildet, in denen sich das abzudichtende Medium ablagern kann.

Der Erfindung liegt die Aufgabe zugrunde, ein Sekundärdichtungselement der eingangs erwähnten Gattung zu schaffen, das eine zuverlässige Abdichtung bei steriltechnischen Anwendungen ermöglicht, die den diesbezüglichen Standardanforderungen Rechnung trägt.

Diese Aufgabe wird durch die Merkmale des Anspruchs 1 gelöst. Die spezielle im Anspruch 1 näher umrissene Querschnittskonfiguration des Sekundärdichtungselementes erzeugt an den dem abzudichtenden Medium ausgesetzten kritischen Eckbereichen zwischen Gleitring und Gehäuse maximale Dichtungskräfte im Sekundärdichtungselement, die dieses in fester dichtender Beziehung zu benachbarten Flächen der Bauteile pressen. Dabei ist nur eine der den Querschnitt des Sekundärdichtungselementes bildenden Flächen eine axiale Schrägfläche. Das Sekundärdichtungselement kann dadurch ähnlich problemlos wie die bislang verwendeten O-Ringe montiert und demontiert werden, so dass einer der Voraussetzungen für eine steriltechnische Anwendung Rechnung getragen ist. Andererseits wird die Bildung von Toträumen wirksam vermieden, wenn ein Faktor k bei der Dimensionierung des Sekundärdichtungselementes eingehalten ist. Nur eine der axialen Endflächen, die als Schrägfläche ausgebildet ist, muss in Anlage mit einer betreffenden Dichtfläche an einem abzudichtenden Bauteil gebracht werden, um einen Totraum an dieser Seite zu schliessen, während an der gegenüberliegenden axialen Endfläche auch im entlasteten Zustand keine Toträume gebildet sind. Bezüglich Weiterbildungen der Erfindung kann auf die Unteransprüche verwiesen werden.

Die Erfindung wird nachfolgend anhand einer Ausführungsform und der Zeichnung näher erläutert. Es zeigen:

Fig. 1 in längsgeschnittener fragmentarischer Ansicht eine Gleitringdichtungsanordnung mit einem Sekundärdichtungselement gemäss der Erfindung, dargestellt in Verbindung mit der Abdichtung einer Wellendurchtrittsöffnung in einem Gehäuse,

Fig. 2 in vergrössertem Massstab ein Detail X in Fig. 1 mit Darstellung des Sekundärdichtungselementes im Einbauzustand, und

Fig. 3 in geschnittener fragmentarischer Ansicht das Sekundärdichtungselement nach Fig. 1 und 2, dargestellt im Ausgangszustand vor Einbau.

Obschon ein Hauptanwendungsgebiet der Erfindung die Abdichtung einer Welle, z.B. der Laufradwelle einer Pumpe für die Förderung von Fluiden ist, bei denen besondere Anforderungen an die Sterilhaltung gestellt werden, ist die Erfindung auf dieses Anwendungsgebiet nicht beschränkt. Sie kann vielmehr vorteilhaft immer dann zur Anwendung kommen, wenn die Aufgabe besteht, für die Abdichtung eine Gleitringdichtungsanordnung vorzusehen, bei der Toträume, in denen sich das abzudichtende Medium ansammeln und über längere Betriebszeiten verbleiben kann, vermieden werden müssen.

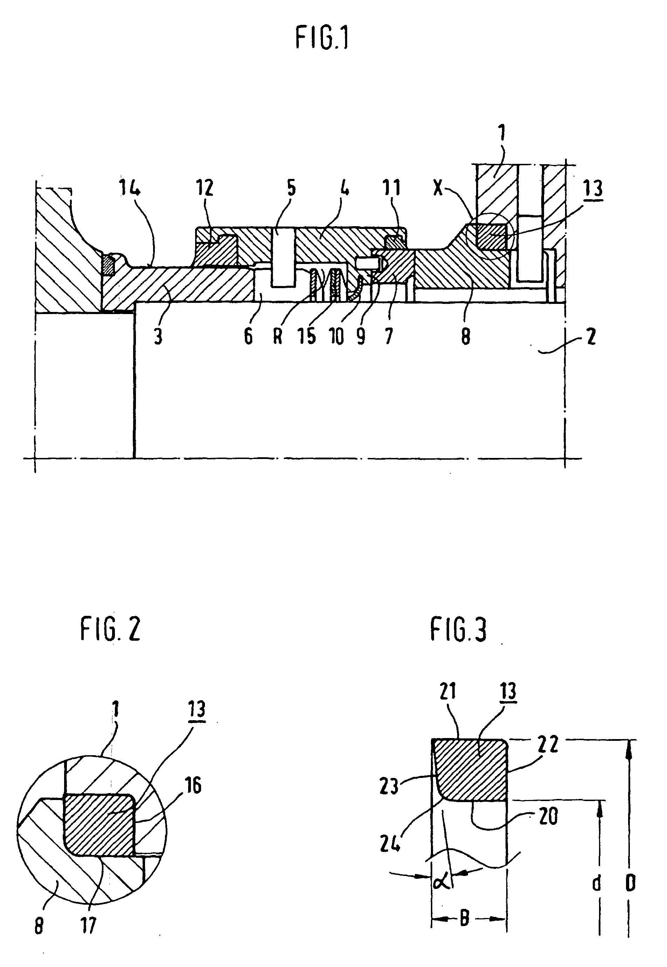

In Fig. 1 sind fragmentarisch ein Pumpengehäuse 1 und eine Welle 2 gezeigt, die sich durch eine Wellendurchtrittsbohrung des Gehäuses 1 nach aussen zu einer Antriebsquelle (nicht gezeigt) erstreckt. Auf der Welle 2 ist eine Buchse 3 angeordnet. Die Buchse 3 ist durch dem Fachmann bekannte Mittel axial lagemässig auf der Welle 2 zur gemeinsamen Drehung mit dieser fixiert. Auf dem äusseren Umfang 14 der Buchse 3 ist ein Mitnehmergehäuse 4 angeordnet, das in Gestalt eines Rohrabschnittes ausgebildet sein kann. Von einer axial zwischenliegenden Stelle des Mitnehmergehäuses 4 ragt radial nach innen ein Mitnehmerzapfen 5 ab, der in eine längliche Ausnehmung oder Nut 6 eingreift, die in einem benachbarten axialen Endbereich der Buchse 3 ausgebildet ist. Eine Drehbewegung der Buchse 3 wird daher über den Mitnehmerzapfen 5 auf das Mitnehmergehäuse 4 übertragen, wobei gleichzeitig die Verbindung zwischen dem Mitnehmerzapfen 5 und der länglichen Ausnehmung oder Nut 6 dafür sorgt, dass das Mitnehmergehäuse 4 relativ zur Buchse 3 axial beweglich ist.

Am Mitnehmergehäuse 4 ist nahe einem axialen Ende (in der Zeichnung rechtsseitigen axialen Ende) ein Gleitring 7 gehalten, der mit einem gegenüberliegenden Gleitring 8 zusammenwirkt, der stationär am Gehäuse 1 gehalten und durch ein nachfolgend näher beschriebenes stationäres Sekundärdichtungselement 13 gegenüber dem Gehäuse 1 abgedichtet ist. Die Gleitringe 7, 8 haben zusammenwirkende radiale Dichtflächen, zwischen denen bei Betrieb ein Dichtspalt gebildet wird, um einen Raum aussenumfänglich der Gleitringe 7, 8 gegenüber einem Raum innenumfänglich der Gleitringe 7, 8 abzudichten. Wenn erwünscht, können förderwirksame Ausnehmungen in wenigstens einer der zusammenwirkenden Gleitflächen vorgesehen sein, um das abzudichtende Medium in den Bereich zwischen den Gleitflächen zu pumpen und dadurch die Dichtspaltbildung zu fördern.

Der Gleitring 7 ist zur gemeinsamen Drehung mit dem Mitnehmergehäuse 4 vorzugsweise in Lossitz gehalten. An seinem äusseren Umfang ist der Gleitring 7 gegenüber dem Mitnehmergehäuse 4 durch ein Sekundärdichtungselement 11 abgedichtet. An einem radial nach innen nahe dem Gleitring 7 ragenden Ansatzbereich 9 des Mitnehmergehäuses 4 ist eine Dichtung 10 in Gestalt einer Ringscheibe aus einem elastischen Material wie Polytetrafluorethylen (PTFE) gehalten, die in dichtender Beziehung mit der äusseren Oberfläche der Welle 2 steht, um einen zwischen dem Mitnehmergehäuse 4 und der Oberfläche der Welle 2 begrenzten Federraum R abzudichten. Eine Vorspannfeder 15, bei der es sich um eine Tellerfeder handeln kann, ist im Federraum R angeordnet. Die Vorspannfeder 15 stützt sich mit einem axialen Ende am Ansatzbereich 9 des Mitnehmergehäuses 4 und mit dem anderen axialen Ende an der Buchse 3 ab.

Der Federraum R ist gegenüber der Aussenumgebung abgedichtet, so dass das abzudichtende Medium nicht in Berührung mit der Vorspannfeder 15, der Ausnehmung 6 und dem Mitnehmerbolzen 5, d.h. Teilen kommen kann, an denen sich das abzudichtende Medium ansammeln kann.

Zur Abdichtung des Mitnehmergehäuses 4 genüber der Buchse 3 ist ein dynamisches Sekundärdichtungselement 12 vorgesehen. Die Sekundärdichtungselemente 11, 12 können ähnlich ausgebildet sein. Jedes Sekundärdichtungselement 11, 12 schafft eine Dichtfläche mit einer bestimmten axialen Abmessung, längs der eine totraumfreie flächenmässige dichtende Beziehung zu der betreffenden Oberfläche der Buchse 3 bzw. des Gleitringes 7 zustande kommt.

In Fig. 2 und 3 ist das stationäre Sekundärsdichtungselement 13 mit weiteren Details gezeigt. Das Sekundärdichtungselement 13 hat eine innere zylindrische Umfangsfläche 20, eine äussere zylindrische Umfangsfläche 21 sowie axial beabstandete Endflächen 22 und 23. Die dem stationären Gleitring 8 zugewandte Endfläche 23 ist gegenüber einer radialen Ebene unter einem Winkel $\alpha$ geneigt, der sich in Richtung auf die innere Umfangsfläche 20 öffnet. Versuche haben gezeigt, dass der Winkel $\alpha$ zwischen etwa 2 und 15° betragen sollte. Die Schräge bewirkt, dass die axialen Abmessungen des Sekundärsdichtungselementes 13 an der äusseren Umfangsfläche 21 grösser als an der inneren Umfangsfläche 20 sind.

Mit Ausnahme an der End- oder Schrägfläche 23 stehen die übrigen angrenzenden Flächen 20, 22 bzw. 21, 22 in einer im Wesentlichen rechtwinkligen Beziehung zueinander. Ein Übergangsbereich 24 zwischen der End- oder Schrägfläche 23 und der inneren Umfangsfläche 20 kann, wie dargestellt, gerundet ausgebildet sein.

Fig. 2 zeigt das stationäre Sekundärdichtungselement 13 im Einbauzustand zur Schaffung einer Abdichtung zwischen dem Gehäuse 1 und dem stationären Gleitring 8. Zur Aufnahme des Sekundärdichtungselement 13 ist einerseits im Gehäuse 1 eine Ausnehmung 16 und im Gleitring 8 eine Ausnehmung 17 vorgesehen, die beide rechtwinklig zueinander stehende Wände haben und in ihren radialen und axialen Abmessungen an die des Sekundärdichtungselementes 13 angepasst sind. Die Eckbereiche zwischen benachbarten Wänden der Ausnehmungen 16, 17 sind vorzugsweise gerundet ausgebildet.

Im Einbauzustand können die Ausnehmungen 16, 17 das Sekundärdichtungselement 13 spaltfrei umschliessen. Bei der Montage wird das Sekundärdichtungselement 13 zunächst in die gleitringseitige Ausnehmung 17 eingesetzt und dann der Gleitring 8 zusammen mit dem darin angeordneten Sekundärdichtungselement 13 am Gehäuse 1 montiert, wobei die Flächen 21, 22 des Sekundärdichtungselementes 13 in der gehäuseseitigen Ausnehmung 16 zu liegen kommen. Eine gegenseitige axiale Verspannung des Gehäuses 1 und des Gleitringes 8 bewirkt, dass das Sekundärdichtungselement 13 axial komprimiert wird, wobei sich die Schrägfläche 23 im Zuge dieser Komprimierung an der betreffenden Wand der gleitringseitigen Ausnehmung 17 anlegt und der von den Ausnehmungen 16, 17 umgrenzte Raum vollständig vom Sekundärdichtungselement 13 ausgefüllt wird. Infolge der Schrägfläche 23 wird dabei das Sekundärdichtungselement 13 an seiner äusseren Umfangsfläche 21 am stärksten komprimiert. Dadurch herrschen an dieser Stelle die grössten Dichtkräfte wodurch eine spaltfreie dichtende Beziehung des Sekundärdichtungselementes 13 mit den benachbarten Wänden der Ausnehmungen 16, 17 an der dem abzudichtenden Medium ausgesetzten Eckstelle nahe der äusseren Umfangsfläche 21 gewährleistet wird.

Es wurde festgestellt, dass die beschriebenen Wirkungen des Sekundärdichtungselementes 13 dadurch gefördert werden, wenn die radialen und axialen Querschnittsabmessungen in einem Verhältnis k zwischen 0,7 bis 1,2 stehen. mit

$$k = \frac{D - d}{B}$$

Darin bedeuten: D = Durchmesser der äusseren Umfangsfläche 21, d = Durchmesser der inneren Umfangsfläche 20, B = Breite des Sekundärdichtungselementes 13 an der äusseren Umfangsfläche 21.

Das stationäre Sekundärdichtungselement 13 kann aus einem gummielastischen Material, wie einem elastomeren Material gebildet sein.

**Patentansprüche**

1. Sekundärdichtungselement für eine Gleitringdichtungsanordnung, insbesondere für steriltechnische Anwendungen, das einen Querschnitt hat, der durch ein Paar radial beabstandete äussere und innere Umfangsflächen (20, 21) und ein Paar axial beabstandete Endflächen (22,23) begrenzt ist, **dadurch gekennzeichnet, dass** eine der Endflächen eine unter einem sich unter einer von der äusseren zur inneren Umfangfläche öffnenden Winkel α gegenüber einer radialen Ebene geneigte Schrägfläche (23) ist, während angrenzende Umfangs- und Endflächen (20-22), wenn nicht angrenzend an die Schrägfläche, unter einem rechten Winkel zueinander stehen, und dass ein Verhältnis k der radialen und axialen Querschnittsabmessungen des Sekundärdichtungselementes im Bereich von 0,7 bis 1,2 liegt, wobei

$$k = \frac{D - d}{B}$$

   worin bedeuten:

   D = Durchmesser der äusseren Umfangsfläche (21),
   d = Durchmesser der inneren Umfangsfläche (20),
   B = Breite des Sekundärdichtungselementes an der äusseren Umfangsfläche (21).

2. Sekundärdichtungselement nach Anspruch 1, **dadurch gekennzeichnet, dass** der Winkel α zwischen 2° und 15° beträgt.

3. Sekundärdichtungselement nach Anspruch 1 oder 2, **dadurch gekennzeichnet, dass** ein Übergangsbereich (24) zwischen der Schrägfläche (23) und der inneren Umfangsfläche (20) gerundet ist.

4. Sekundärdichtungselement nach einem der vorhergehenden Ansprüche, **dadurch gekennzeichnet, dass** dieses aus einem elastomeren Material gebildet ist.

**Claims**

1. A secondary seal element for a face seal assembly, especially for use in sterile applications, said secondary seal element having a cross-section which is bounded by a pair of radially spaced outer and inner peripheral surfaces (20,21) and a pair of axially spaced end faces (22,23), **characterized in that** one of said end faces is an inclined surface (23) inclined with respect to a radial plane at an angle α diverging from the outer to the inner peripheral surface, whereas adjoining peripheral surfaces and end faces (20 - 22) not adjacent the inclined surface are at a right angle relative to one another, and **in that** the ratio k of the radial and axial cross-sectional dimensions of the secondary seal element is in a range of 0.7 to 1.2, wherein

$$k = \frac{D - d}{B}$$

   where
   D = the diameter of the outer peripheral surface (21)
   d = the diameter of the inner peripheral surface (20),
   B = the width of the outer peripheral surface (21) of the secondary seal element.

2. The secondary seal element according to claim 1, **characterised in that** the angle α amounts is between 2° and 15°.

3. The secondary seal element according to claim 1 or 2, **characterised in that** a transition portion (24) between the inclined surface (23) and the inner peripheral surface (20) is rounded.

4. The secondary seal element according to anyone of the preceding claims, **characterised in that** it is formed from an elastomeric material.

**Revendications**

1. Elément de joint d'étanchéité secondaire pour un dispositif d'étanchéité à bague glissante, en particulier pour des applications en technique stérile, pourvu d'une section transversale limitée par une paire de surfaces périphériques externe et interne (20, 21) distantes radialement et une paire de surfaces finales (22, 23) distantes axialement, **caractérisé en ce qu'**une des surfaces finales est une surface oblique (23) inclinée par rapport à un niveau radial d'un angle α s'ouvrant de la surface périphérique externe vers la surface périphérique interne, tandis que des surfaces périphériques et finales adjacentes (20-22), si non adjacentes à la surface oblique, sont mutuellement à angle droit, et **en ce qu'**un rapport k des mesures radiales et axiales de la section transversale de l'élément de joint d'étanchéité secondaire est compris entre 0,7 et 1,2, où

$$k = \frac{D - d}{B}$$

   D étant le diamètre de la surface périphérique externe (21),
   d étant le diamètre de la surface périphérique interne (20),
   B étant la largeur de l'élément de joint d'étanchéité secondaire à la surface périphérique externe (21).

2. Elément de joint d'étanchéité secondaire selon la revendication 1, **caractérisé en ce que** l'angle α est compris entre 2° et 15°.

3. Elément de joint d'étanchéité secondaire selon la revendication 1 ou 2, **caractérisé en ce qu'**une zone de jonction (24) entre la surface oblique (23) et la surface périphérique interne (20) est arrondie.

4. Elément de joint d'étanchéité secondaire selon l'une quelconque des revendications précédentes, **caractérisé en ce que** celui-ci est conçu dans un matériau élastomère.

# FIG.1

# FIG. 2

# FIG.3